# EUROPÄISCHE PATENTSCHRIFT

(11) **EP 2 742 772 B1**
(45) Veröffentlichungstag und Bekanntmachung des Hinweises auf die Patenterteilung: **24.04.2019**
(21) Anmeldenummer: 12748664.5
(22) Anmeldetag: 01.08.2012
(51) Int. Cl.: H05B 3/84

(54) **ELEKTRISCHE KONTAKTVERBUNDE, VERFAHREN ZUR HERSTELLUNG ELEKTRISCHER KONTAKTVERBUNDE**
ELECTRIC CONTACT ASSEMBLY, METHOD FOR PRODUCING ELECTRIC CONTACT ASSEMBLIES
COMPOSITE DE CONTACT ÉLECTRIQUE, PROCÉDÉ DE FABRICATION DE COMPOSITES DE CONTACT ÉLECTRIQUES

(30) Priorität: 09.08.2011 EP 11176894
(43) Veröffentlichungstag der Anmeldung: 18.06.2014
(73) Patentinhaber: Saint-Gobain Glass France, 92400 Courbevoie (FR)
(72) Erfinder: RATEICZAK, Mitja, 52146 Würselen (DE); REUL, Bernhard, 52134 Herzogenrath (DE)
(74) Vertreter: Gebauer, Dieter Edmund
(86) Internationale Anmeldenummer: PCT/EP2012/064992
(87) Internationale Veröffentlichungsnummer: WO 2013/020863

(56) Entgegenhaltungen:
- EP-A1- 2 278 851
- DE-A1- 3 919 974

## Beschreibung

Die Erfindung liegt auf dem technischen Gebiet der Herstellung flächiger elektrischer Strukturen mit einem Substrat und einer darauf aufgebrachten elektrisch leitfähigen Beschichtung und betrifft elektrische Kontaktverbunde von flächigen elektrischen Strukturen, sowie Verfahren zur Herstellung elektrischer Kontaktverbunde.

Flächige elektrische Strukturen mit einem Substrat aus einem elektrisch isolierenden Material und einer darauf aufgebrachten elektrisch leitfähigen Beschichtung sind als solche hinlänglich bekannt. Häufig werden sie als transparente oder opake Flächenheizkörper, insbesondere in Form beheizbarer Verglasungen, eingesetzt. Beispiele hierfür sind beheizbare Windschutz-, Heck-, Dach- oder Seitenscheiben in Kraftfahrzeugen oder an Wänden oder frei stehend montierte Heizelemente in Wohnräumen, welche zur Wohnraumheizung dienen. Sie können gleichermaßen aber auch als heizbare Spiegel oder transparente Dekorteile eingesetzt werden. Eine alternative Verwendung der leitfähigen Beschichtung ist als Flächenantenne zum Empfangen von elektromagnetischer Strahlung. In der Patentliteratur sind flächige elektrische Strukturen bereits vielfach beschrieben worden. Lediglich beispielhaft sei in diesem Zusammenhang auf die Druckschriften DE 102008018147 A1,
DE 102008029986 A1, DE 10259110 B3 und DE 102004018109 B3 verwiesen.

In der Regel ist die elektrisch leitfähige Beschichtung mit zumindest einer Elektrode elektrisch verbunden. So dient im Allgemeinen eine Einzel-Elektrode in Flächenantennen zum Auskoppeln elektrischer Signale aus der leitfähigen Beschichtung. In Flächenheizkörpern ist die leitfähige Beschichtung typischer Weise mit wenigstens einem Paar streifen- bzw. bandförmiger Elektroden (Sammelschiene oder Bus Bar) elektrisch verbunden, welche den Heizstrom möglichst gleichmäßig in die leitfähige Beschichtung einleiten und auf breiter Front verteilen sollen.

Es ist üblich, bei einer flächigen elektrischen Struktur die wenigstens eine Elektrode mit einem metallischen Kontaktelement zur Formung eines elektrischen Kontaktverbunds elektrisch zu verbinden, beispielsweise um die leitfähige Beschichtung mit einer nachgeschalteten Antennenelektronik (z. B. Verstärkerschaltung) oder mit den beiden Polen einer den Heizstrom zur Verfügung stellenden Strom-/Spannungsquelle zu verbinden.

Nun hat sich in der Praxis gezeigt, dass ein solcher Kontaktverbund einem erhöhten Verschleiß unterliegt und brechen kann, was gegebenenfalls sogar mit einem Substratbruch (z B. Glasbruch) einhergeht. Da hieraus ein kompletter Funktionsausfall des Flächenheizkörpers resultiert, der stets eine Reparatur durch Servicepersonal erfordert, ist es wünschenswert, den Kontaktverbund in einer möglichst stabilen Weise auszubilden. Dies erhöht jedoch in unerwünschter Weise die Fertigungskosten.

Die deutsche Offenlegungsschrift DE 3919974 A1 zeigt in Figur 4 einen Kontaktverbund mit einer Glasscheibe, einem leitfähigen Überzug, einem leitfähigen Emailstromkollektor, einer im Sprühverfahren abgeschiedenen, lokalisierten Abscheidung aus Metall und einem Anschluss, der durch ein Lot an der Abscheidung befestigt ist. Dieses Dokument befasst sich nicht mit dem Problem von thermischen Spannungen im Kontaktverbund.

Die europäische Patentanmeldung EP 2278851 A1 zeigt in Figur 1 einen Kontaktverbund mit einer Glasscheibe, einer leitfähigen Beschichtung und zwei im Sprühverfahren abgeschiedenen, separaten Schichten. Dieses Dokument befasst sich nicht mit dem Problem von thermischen Spannungen im Kontaktverbund.

Demgegenüber besteht die Aufgabe der vorliegenden Erfindung darin, einen elektrischen Kontaktverbund einer flächigen elektrischen Struktur zur Verfügung zu stellen, welcher über eine verbesserte mechanische Stabilität verfügt. Diese und weitere Aufgaben werden nach dem Vorschlag der Erfindung durch elektrische Kontaktverbunde sowie Verfahren zur Herstellung elektrischer Kontaktverbunde mit den Merkmalen der nebengeordneten Patentansprüche gelöst. Vorteilhafte Ausgestaltungen der Erfindung sind durch die Merkmale der Unteransprüche angegeben.

Erfindungsgemäß ist ein erster elektrischer Kontaktverbund einer flächigen elektrischen Struktur, beispielsweise eines Flächenheizkörpers, insbesondere einer beheizbaren Verglasung, oder einer Flächenantenne, gezeigt. Der Kontaktverbund umfasst ein flächiges Substrat aus beispielsweise Glas oder Kunststoff und eine darauf aufgebrachte elektrisch leitfähige Beschichtung, welche mit einer Elektrode elektrisch verbunden ist.

Weiterhin ist ein an die Elektrode angeschlossenes, metallisches Kontaktelement angeordnet, welches zur elektrischen Verbindung der leitfähigen Beschichtung mit einer elektrischen Einrichtung, beispielsweise eine elektronische Schaltung zur Verarbeitung von Antennensignalen oder einem Pol einer Strom-/Spannungsquelle vorgesehen ist. Insbesondere bei einem gläsernen Substrat hat das Material des metallischen Kontaktelements typischer Weise einen thermischen Ausdehnungskoeffizienten, welcher größer ist als der thermische Ausdehnungskoeffizient von Glas. Der Kontaktverbund umfasst des Weiteren wenigstens eine durch ein thermisches Sprühverfahren, vorzugsweise Kaltgassprühen, hergestellte, elektrisch leitfähige Sprühschicht. Hier und im Weiteren ist unter dem Begriff "thermisches Sprühverfahren" ein Auftragsverfahren zu verstehen, bei dem ein Partikelstrom, durch den die Sprühschicht gebildet wird, mit hoher Energie auf ein Target gerichtet wird, wodurch eine Adhäsion zwischen den Partikeln und dem Material des Targets bewirkt wird. Speziell beim Kaltgassprühen werden die Partikel zum Erzeugen des Gasstrahls zwar erwärmt, jedoch in der Regel nicht bis zum Schmelzpunkt, so dass das Gas relativ "kalt" ist. Derartige Sprühverfahren, insbesondere das Kaltgassprühen (Cold Spraying), sind dem Fachmann wohlbekannt, so dass es sich erübrigt hier nähere Ausführungen zu machen. In der Patentliteratur sind sie beispielsweise in den deutschen Offenlegungsschriften DE 19747386 A1 und DE 10037212 A1 beschrieben.

Im erfindungsgemäßen Kontaktverbund umfasst die Sprühschicht wenigstens ein Metall und/oder wenigstens eine Metalllegierung und ist zwischen der leitfähigen Beschichtung und dem Kontaktelement angeordnet. Wesentlich hierbei ist, dass das Material der Sprühschicht einen thermischen Ausdehnungskoeffizienten hat, welcher zwischen den thermischen Ausdehnungskoeffizienten der Materialien von Träger und Kontaktelement liegt.

In der Praxis sind flächige elektrische Strukturen, wie Flächenheizkörper und Flächenantennen, oftmals relativ großen Temperaturschwankungen unterworfen, welche beispielsweise im Bereich von -40°C bis 120°C liegen können, so dass die für einen Kontaktverbund eingesetzten Materialien entsprechend großen Volumenänderungen unterliegen. Wie die Anmelderin erkannt hat, tritt ein größter Unterschied in den thermisch verursachten Volumenänderungen in der Regel zwischen dem Substrat für die leitfähige Beschichtung und dem metallischen Kontaktelement auf. Insofern besteht die Möglichkeit, dass große Temperaturwechsel thermische Spannungen verursachen, welche gegebenenfalls das Auftreten eines Bruchs im Kontaktverbund begünstigen.

Im Unterschied hierzu kann im erfindungsgemäßen Kontaktverbund in vorteilhafter Weise durch die Sprühschicht, welche zwischen Substrat und Kontaktelement angeordnet ist, eine Verringerung des Unterschieds im thermischen Ausdehnungskoeffizienten benachbarter Komponenten des Kontaktverbunds erreicht werden. Dem Auftreten von thermischen Spannungen kann dadurch sehr effektiv entgegen gewirkt werden, wobei die Gefahr eines Brechens des Kontaktverbunds deutlich verringert ist.

Grundsätzlich kann die Sprühschicht einen beliebigen thermischen Ausdehnungskoeffizienten haben, solange gewährleistet ist, dass er zwischen jenen des Substrats und dem Kontaktelement liegt, um den vorteilhaften Effekt einer Verminderung thermisch bedingter Spannungen zu erreichen. Bei einer im Hinblick auf die Verminderung thermisch bedingter Spannungen besonders vorteilhaften Ausgestaltung des erfindungsgemäßen Kontaktverbunds liegt der thermische Ausdehnungskoeffizient der Sprühschicht im Bereich eines mittleren Drittels eines von den thermischen Ausdehnungskoeffizienten von Substrat und Kontaktelement begrenzten Werteintervalls thermischer Ausdehnungskoeffizienten, wodurch eine besonders effektive Verringerung von thermischen Spannungen erreicht werden kann. Insbesondere kann der thermische Ausdehnungskoeffizient der Sprühschicht dabei zumindest annähernd einem Mittelwert, gebildet aus den thermischen Ausdehnungskoeffizienten von Substrat und Kontaktelement, entsprechen, um einen optimalen Effekt zu erzielen. Bei einem gläsernen Substrat und einem metallischen Kontaktelement kann es zu diesem Zweck von Vorteil sein, wenn der thermische Ausdehnungskoeffizient der Sprühschicht im Bereich von 7 bis 17 (x 10⁻⁶ K⁻¹), vorzugsweise im Bereich von 12 bis 13 (x 10⁻⁶ K⁻¹), liegt.

Bei einer vorteilhaften Ausgestaltung des erfindungsgemäßen Kontaktverbunds ist die Sprühschicht direkt auf die Elektrode gesprüht. Wie Versuche der Anmelderin gezeigt haben, kann durch Beschuss mit den Partikeln eine eventuell vorhandene Oxid- und/oder Korrosionsschicht an der Elektrode beschädigt werden, so dass sich eine besonders starke (direkte) Verbindung zwischen den Materialien von Sprühschicht und Elektrode ausbilden kann. Insbesondere kann durch relativ hohe Partikelgeschwindigkeiten sowie großer Duktilität des eingesetzten Beschussmaterials eine Aufrauhung der Oberfläche der Elektrode bewirkt werden, wobei sogar Hinterschnitte entstehen können. In Verbindung mit einer Verringerung der thermischen Spannungen im Kontaktverbund durch einen geeignet gewählten thermischen Ausdehnungskoeffizienten der Sprühschicht kann auf diese Weise ein besonders stabiler, verschleißarmer Kontaktverbund hergestellt werden.

Alternativ ist es auch möglich, die Sprühschicht direkt auf die elektrisch leitfähige Beschichtung aufzusprühen, wobei in diesem Fall eine besonders gute Adhäsion der Sprühschicht an der leitfähigen Beschichtung erzielbar ist. Wie dem Fachmann sich bekannt ist, weist die elektrisch leitfähige Beschichtung aufgrund der glatten Oberfläche des Substrats eine gleichermaßen glatte Oberfläche auf. Wenn die Sprühschicht auf die elektrisch leitfähige Beschichtung aufgebracht wird, kann zwischen der (rauheren bzw. groberen) Sprühschicht und der elektrisch leitfähigen Beschichtung eine stärkere Verbindung erreicht werden als beim Aufbringen der Elektrode auf die elektrisch leitfähige Beschichtung, beispielsweise im Druckverfahren. Insofern kann ein stärkerer mechanischer Halt zwischen Sprühschicht und elektrisch leitfähiger Beschichtung erreicht werden als zwischen Elektrode und elektrisch leitfähiger Beschichtung. Dies gilt insbesondere für eine elektrisch leitfähige Beschichtung, die als Mehrschichtensystem ausgebildet ist, bei der die Sprühschicht mit allen Schichten eine "Verkrallung" (mechanische Anbindung) ermöglicht, wohingegen die nicht im Sprühverfahren aufgebrachte Elektrode nur an die oberste Schicht mechanisch angebunden ist. In entsprechender Weise ist die Sprühschicht an alle Schichten des Mehrschichtsystems auch elektrisch angebunden, wohingegen die nicht im Sprühverfahren aufgebrachte Elektrode nur an die oberste Schicht elektrisch angebunden ist.

Andererseits weist auch die Elektrode eine eher rauhe bzw. grobe Oberfläche auf, so dass durch die auf die (auch eher rauhe bzw. grobe) Sprühschicht aufgebrachte Elektrode eine besonders gute "Verkrallung" (mechanische und elektrische Anbindung) erreicht werden kann. Somit kann bei einem Kontaktverbund, bei dem Sprühschicht auf die elektrisch leitfähige Beschichtung und die Elektrode auf Sprühschicht aufgebracht ist, eine besonders gute mechanische und elektrische Anbindung von sowohl Sprühschicht als auch Elektrode erreicht werden, so dass der Kontaktverbund besonders stabil ist und über eine gute elektrische Leitfähigkeit verfügt.

Bei einer weiteren vorteilhaften Ausgestaltung des erfindungsgemäßen Kontaktverbunds weist die Sprühschicht eine solche Schichtdicke auf, dass die Elektrode mechanisch verstärkt wird. Die Schichtdicke der Sprühschicht kann zu diesem Zweck beispielsweise 2 bis 50 Mal so dick sein wie eine Schichtdicke der Elektrode. Durch diese Maßnahme kann die mechanische Festigkeit des Kontaktverbunds noch weiter verbessert werden, wobei insbesondere einem Bruch des Kontaktverbunds durch Ablösen der Elektrode vom Substrat wirksam entgegen gewirkt werden kann.

Erfindungsgemäß ist das Kontaktelement nicht durch ein Sprühverfahren hergestellt und somit nicht als Sprühschicht ausgebildet, sondern in Form eines vorgefertigten (z.B. einteiligen) Kontaktkörpers bzw. Kontaktstücks ausgebildet und wird als vorgefertigter Kontaktkörper mit der Elektrode elektrisch verbunden.

In dem erfindungsgemäßen Kontaktverbund handelt es sich bei dem Kontaktelement nicht um ein Lot, so dass das Kontaktelement als solches lotfrei ist. Das Kontaktelement kann aber beispielsweise durch ein bleihaltiges oder bleifreies Lot im Kontaktverbund befestigt sein. In der Praxis hat sich gezeigt, dass zwar bleihaltige Lote eine hohe Duktilität zeigen, dies jedoch nicht für bleifreie Lote gilt. In dem erfindungsgemäßen Kontaktverbund lässt sich die Sprühschicht besonders vorteilhaft zur Verbesserung der mechanischen Stabilität (Duktilität) des Kontaktverbunds auch beim Einsatz bleifreier Lote einsetzen, wobei das Kontaktelement durch ein bleifreies Lot an der Elektrode oder der Sprühschicht befestigt ist.

In dem erfindungsgemäßen Kontaktverbund umfasst die (elektrisch leitfähige) Sprühschicht wenigstens ein Metall und/oder wenigstens eine Metalllegierung, um zu erreichen, dass der thermische Ausdehnungskoeffizient der Sprühschicht zwischen jenen von Substrat und Kontaktelement liegt. Vorteilhaft umfasst die Sprühschicht ein oder mehrere Metalle und/oder ein oder mehrere Metalllegierungen, gewählt aus Silber, Kupfer, Gold, Aluminium, Natrium, Wolfram, Messing, Eisen, Chrom, Blei, Wismut, Titan, Zinn, Zink, Molybdän, Indium, Nickel, Platin, Vanadium, Kobalt, Thallium und Niob. Die Wahl eines geeigneten Metalls oder Metalllegierung ergibt sich in wesentlicher Weise durch den gewünschten thermischen Ausdehnungskoeffizienten, welcher auf diese Weise einfach und zuverlässig eingestellt werden kann.

Von Vorteil kann es weiterhin sein, wenn die Sprühschicht zumindest einen weiteren Bestandteil aus einem elektrischen Isolierstoff, beispielsweise Glaspartikel, enthält, um die mechanischen Eigenschaften des Kontaktverbunds sowie den thermischen Ausdehnungskoeffizienten der Sprühschicht gezielt zu beeinflussen.

Erfindungsgemäß ist ein weiterer, zweiter Kontaktverbund gezeigt, welcher sich von dem vorigen Kontaktverbund dadurch unterscheidet, dass die Elektrode zur Kontaktierung der elektrisch leitfähigen Beschichtung durch die Sprühschicht ersetzt ist. Demnach umfasst der Kontaktverbund ein flächiges Substrat aus beispielsweise Glas oder Kunststoff und eine darauf aufgebrachte elektrisch leitfähige Beschichtung, sowie eine durch ein thermisches Sprühverfahren, insbesondere Kaltgassprühen, auf die leitfähige Beschichtung aufgesprühte Sprühschicht. Der Kontaktverbund umfasst weiterhin ein mit der Sprühschicht elektrisch verbundenes, metallisches Kontaktelement, welches zum Anschluss der leitfähigen Beschichtung an eine elektrische Komponente, beispielsweise Strom-/Spannungsquelle, dient. Dabei verfügt das Material der Sprühschicht über einen thermischen Ausdehnungskoeffizienten, der zwischen den thermischen Ausdehnungskoeffizienten der Materialien von Substrat und Kontaktelement liegt. Der Kontaktverbund kann grundsätzlich in der gleichen Weise ausgestaltet sein, wie der zuvor beschriebene Kontaktverbund. Um unnötige Wiederholungen zu vermeiden, wird auf die dort gemachten Ausführungen Bezug genommen.

In einem solchen Kontaktverbund kann in besonders vorteilhafter Weise durch die auf die leitfähige Beschichtung aufgebrachte Sprühschicht die Gefahr thermischen Spannungen stark verringert werden. Zudem kann die Sprühschicht mit einer besonders hohen Haftkraft mit der leitfähigen Beschichtung verbunden werden.

Die Erfindung erstreckt sich weiterhin auf eine flächige elektrische Struktur, insbesondere ein Flächenheizkörper, beispielsweise eine beheizbare transparente oder opake Verglasung, oder eine Flächenantenne, welche ein flächiges Substrat mit einer elektrisch leitfähigen Beschichtung umfasst, wobei die flächige elektrische Struktur über wenigstens einen wie oben beschriebenen Kontaktverbund verfügt.

Ferner erstreckt sich die Erfindung auf ein Verfahren zur Herstellung eines elektrischen Kontaktverbunds einer flächigen elektrischen Struktur, insbesondere zur Herstellung des oben beschriebenen ersten Kontaktverbunds, welches die folgenden Schritte umfasst:
- Bereitstellen eines flächigen Substrats, beispielsweise aus Glas oder Kunststoff, mit einer darauf aufgebrachten elektrisch leitfähigen Beschichtung;
- Herstellen einer mit der leitfähigen Beschichtung elektrisch verbundenen Elektrode;
- Herstellen eines mit der Elektrode elektrisch verbundenen, metallischen Kontaktelements, welches zur Verbindung der Elektrode mit einer elektrischen Komponente, beispielsweise eine elektrische Schaltung oder eine Strom-/Spannungsquelle, Strom-/Spannungsquelle dient;
- Herstellen wenigstens einer Sprühschicht durch ein thermisches Sprühverfahren, insbesondere Kaltgassprühen, welche wenigstens ein Metall und/oder wenigstens eine Metalllegierung umfasst und zwischen der leitfähigen Beschichtung und dem Kontaktelement angeordnet ist, wobei das Material der Sprühschicht über einen thermischen Ausdehnungskoeffizienten verfügt, welcher zwischen den thermischen Ausdehnungskoeffizienten der Materialien von Substrat und Kontaktelement liegt.

Bei einer Ausgestaltung des Verfahrens wird die Sprühschicht auf die Elektrode oder die leitfähige Beschichtung gesprüht, wobei es im Hinblick auf die mechanischen Eigenschaften des Kontaktverbunds von Vorteil sein kann, wenn die Sprühschicht direkt auf die Elektrode gesprüht wird.

Des Weiteren erstreckt sich die Erfindung auf ein Verfahren zur Herstellung eines elektrischen Kontaktverbunds einer flächigen elektrischen Struktur, insbesondere zur Herstellung des oben beschriebenen zweiten Kontaktverbunds, mit den folgenden Schritten:
- Bereitstellen eines Substrats mit einer darauf aufgebrachten elektrisch leitfähigen Beschichtung;
- Aufsprühen einer Sprühschicht durch ein thermisches Sprühverfahren, insbesondere Kaltgassprühen, auf die leitfähige Beschichtung, wobei die Sprühschicht wenigstens ein Metall und/oder wenigstens eine Metalllegierung umfasst und wobei das Material der Sprühschicht über einen thermischen Ausdehnungskoeffizienten verfügt, welcher zwischen den thermischen Ausdehnungskoeffizienten der Materialien von Substrat und Kontaktelement liegt;
- Herstellen eines mit der Sprühschicht elektrisch verbundenen, metallischen Kontaktelements zur Verbindung der leitfähigen Beschichtung mit einer elektrischen Komponente, beispielsweise eine elektrische Schaltung oder eine Strom-/Spannungsquelle.
Darüber hinaus erstreckt sich die Erfindung auf die Verwendung einer durch ein thermisches Sprühverfahren, insbesondere Kaltgassprühen, hergestellten, elektrisch leitfähigen Sprühschicht zur Verminderung von thermischen Spannungen in einem wie oben beschriebenen Kontaktverbund.

Dementsprechend erstreckt sich die Erfindung auf die Verwendung einer durch ein thermisches Sprühverfahren, insbesondere Kaltgassprühen, hergestellten, elektrisch leitfähigen Sprühschicht zur Verminderung von thermischen Spannungen zwischen einem Substrat aus beispielsweise Glas oder Kunststoff und einer darauf aufgebrachten, von einer Elektrode kontaktierten, elektrisch leitfähigen Beschichtung und einem mit der Elektrode elektrisch verbundenen, metallischen Kontaktelement, wobei das Material der Sprühschicht über einen thermischen Ausdehnungskoeffizienten verfügt, welcher zwischen den thermischen Ausdehnungskoeffizienten der Materialien von Substrat und Kontaktelement liegt.

Gleichermaßen erstreckt sie sich auf die Verwendung einer durch ein thermisches Sprühverfahren, insbesondere Kaltgassprühen, hergestellten, elektrisch leitfähigen Sprühschicht zur Verminderung von thermischen Spannungen zwischen einem Substrat aus beispielsweise Glas oder Kunststoff und einer darauf aufgebrachten, von der Sprühschicht kontaktierten elektrisch leitfähigen Beschichtung und einem mit der Sprühschicht elektrisch verbundenen, metallischen Kontaktelement, wobei das Material der Sprühschicht über einen thermischen Ausdehnungskoeffizienten verfügt, welcher zwischen den thermischen Ausdehnungskoeffizienten der Materialien von Substrat und Kontaktelement liegt.

Es versteht sich, dass die verschiedenen Ausgestaltungen der Erfindung einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

### Kurze Beschreibung der Zeichnungen

Die Erfindung wird nun anhand von Ausführungsbeispielen näher erläutert, wobei Bezug auf die beigefügten Figuren genommen wird. Gleiche bzw. gleich wirkende Bestanteile sind mit den gleichen Bezugszahlen bezeichnet. Es zeigen in vereinfachter, nicht maßstäblicher Darstellung:
- Fig. 1: eine schematische Querschnittsdarstellung eines Ausführungsbeispiels für einen erfindungsgemäßen elektrischen Kontaktverbund;
- Fig. 2: eine schematische Querschnittsdarstellung einer Variante des elektrischen Kontaktverbunds von Fig. 1;
- Fig. 3: eine schematische Querschnittsdarstellung einer weiteren Variante des elektrischen Kontaktverbunds von Fig. 1.

### Ausführliche Beschreibung der Zeichnungen

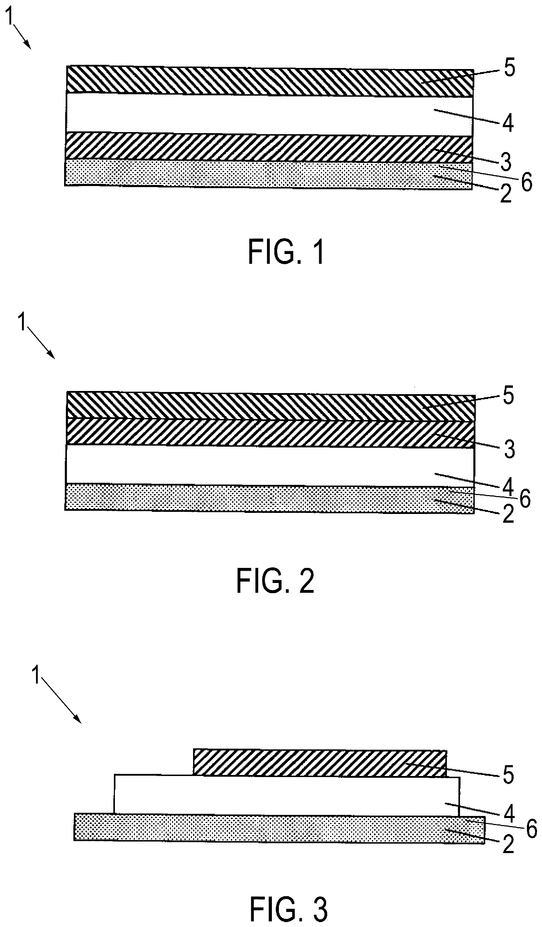

In Figur 1 ist ein insgesamt mit der Bezugszahl 1 bezeichneter Kontaktverbund veranschaulicht, welcher Teil einer nicht weiters dargestellten flächigen elektrischen Struktur ist. Bei der flächigen elektrischen Struktur kann es sich beispielsweise um einen Flächenheizkörper, insbesondere eine beheizbare Verglasung, oder eine Flächenantenne handeln. Die beheizbare Verglasung kann beispielsweise in Form einer Verbundscheibe ausgebildet sein, bei der zwei Einzelscheiben durch eine thermoplastische Klebeschicht miteinander verbunden sind. Gleichermaßen kann es sich bei der beheizbaren Verglasung um ein so genanntes Einscheibensicherheitsglas handeln, das nur eine Einzelscheibe umfasst.

Der Kontaktverbund 1 umfasst wenigstens ein flächiges Substrat 2 mit einer darauf aufgebrachten elektrisch leitfähigen Beschichtung 6, welche in Fig. 1 nicht näher dargestellt ist. Wie hier verwendet, bezieht sich der Ausdruck "Substrat" beispielsweise auf eine Einzelscheibe (Träger) einer Verbundscheibe oder eines Einscheibenglases oder auf den Träger einer Flächenantenne.

Das Substrat 2 besteht beispielsweise aus einem gläsernen Material, wie Floatglas, Quarzglas, Borsilikatglas, Kalk-Natron-Glas, Gussglas oder Keramikglas, oder aus einem nicht-gläsernen Material, beispielsweise Kunststoff, wie Polystyrol (PS), Polyamid (PA), Polyester (PE), Polyvinylchlorid (PVC), Polycarbonat (PC), Polymethylmethacrylat (PMA) oder Polyethylenterephtalat (PET) und/oder Gemische hieraus. Beispiele geeigneter Gläser können insbesondere dem europäischen Patent EP 0847965 B1 entnommen werden. Allgemein kann jedes Material mit ausreichender chemischer Beständigkeit, geeigneter Form- und Größenstabilität, sowie gegebenenfalls hinreichender optischer Transparenz verwendet werden.

Je nach Anwendung kann die Dicke des Substrats 2 breit variieren. Für eine beheizbare, transparente Verglasung liegt die Dicke des Substrats 2 beispielsweise im Bereich von 1 bis 25 mm, wobei für transparente Scheiben typischer Weise eine Dicke von 1,4 bis 2,1 mm verwendet wird. Das Substrat 2 ist planar oder in eine oder mehrere Raumrichtungen gebogen.

Das Substrat 2 kann beispielsweise im Wesentlichen vollflächig mit der leitfähigen Beschichtung 6 beschichtet sein (Beschichtungsgrad z.B. 90%). Bei der leitfähigen Beschichtung 6 kann es sich insbesondere um eine transparente Beschichtung handeln, die für elektromagnetische Strahlung, vorzugsweise elektromagnetische Strahlung einer Wellenlänge von 300 bis 1300 nm, insbesondere für sichtbares Licht, durchlässig ist. Der Begriff "durchlässig" bezieht sich hier auf eine Gesamttransmission des flächigen elektrischen Struktur, die insbesondere für sichtbares Licht beispielsweise >70% und insbesondere >80% ist. Transparente leitfähige Beschichtungen 6 sind beispielsweise aus den Druckschriften DE 202008017611 U1 und EP 0847965 B1 bekannt.

Die leitfähige Beschichtung 6 enthält ein elektrisch leitfähiges Material, typischer Weise ein Metall oder Metalloxid. Beispiele hierfür sind Metalle mit einer hohen elektrischen Leitfähigkeit wie Silber (Ag), Kupfer (Cu), Gold (Au), Aluminium (Al) oder Molybdän (Mo), Metall-Legierungen wie mit Palladium (Pa) legiertes Silber (Ag), sowie transparente, leitfähige Oxide (TCO = Transparent Conductive Oxides). Bei TCO handelt es sich vorzugsweise um Indiumzinnoxid, fluordotiertes Zinndioxid, aluminiumdotiertes Zinndioxid, galliumdotiertes Zinndioxid, bordotiertes Zinndioxid, Zinnzinkoxid oder antimondotiertes Zinnoxid. Beispielsweise besteht die leitfähige Beschichtung 6 aus einer Metallschicht wie eine Silberschicht oder eine silberhaltige Metalllegierung, die zwischen mindestens zwei Beschichtungen aus dielektrischem Material vom Typ Metalloxid eingebettet ist. Das Metalloxid enthält beispielsweise Zinkoxid, Zinnoxid, Indiumoxid, Titanoxid, Siliziumoxid, Aluminiumoxid oder dergleichen sowie Kombinationen von einem oder mehreren hieraus. Das dielektrische Material kann auch Siliziumnitrid, Siliziumcarbid oder Aluminiumnitrid enthalten. Beispielsweise werden Metallschichtsysteme mit mehreren Metallschichten verwendet, wobei die einzelnen Metallschichten durch mindestens eine Schicht aus dielektrischem Material getrennt sind. Auf beiden Seiten einer Silberschicht können auch sehr feine Metallschichten vorgesehen werden, die insbesondere Titan oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern. Vorteilhaft ist die Schichtenfolge thermisch hoch belastbar, so dass sie die zum Biegen von Glasscheiben erforderlichen Temperaturen von typischer Weise mehr als 600°C ohne Schädigung übersteht, wobei aber auch thermisch gering belastbare Schichtenfolgen vorgesehen sein können. Im Allgemeinen ist leitfähige Beschichtung 6 nicht auf ein bestimmtes Material beschränkt, solange durch dieses Material die gewünschte Wirkung, beispielsweise eine flächige, elektrische Heizung des Substrats 2 erreicht werden kann.

Ein solcher Schichtenaufbau wird typischer Weise durch eine Folge von Abscheidevorgängen erhalten. Die leitfähige Beschichtung 6 ist beispielsweise aus der Gasphase direkt auf das Substrat 2 abgeschieden, zu welchem Zweck an sich bekannte Verfahren wie chemische Gasphasenabscheidung (CVD = Chemical Vapor Deposition) oder physikalische Gasphasenabscheidung (PVD = Physical Vapor Deposition) eingesetzt werden können. Vorzugsweise wird die leitfähige Beschichtung 6 durch Sputtern (Magnetron-Kathodenzerstäubung) auf dem Substrat 2 abgeschieden. Denkbar ist jedoch auch, die leitfähige Beschichtung 6 zunächst auf eine Kunststofffolie, insbesondere PET-Folie (PET = Polyethylenterephthalat), aufzubringen, die dann mit dem Substrat 2 verklebt wird.

Die leitfähige Beschichtung 6 hat beispielsweise einen Flächenwiderstand im Bereich von 1 Ohm/Quadrat bis 10 Ohm/Quadrat, insbesondere im Bereich von 1 Ohm/Quadrat bis 5 Ohm/Quadrat.

Die Dicke der leitfähigen Beschichtung 6 kann breit variieren und den Erfordernissen des Einzelfalls angepasst werden. Wesentlich ist hierbei, dass bei einer transparenten flächigen elektrischen Struktur die Dicke der leitfähigen Beschichtung 6 nicht so groß werden darf, dass sie für elektromagnetische Strahlung, vorzugsweise elektromagnetische Strahlung einer Wellenlänge von 300 bis 1300 nm und insbesondere sichtbares Licht, undurchlässig wird. Beispielsweise liegt die Dicke der leitfähigen Beschichtung 6 an jeder Stelle im Bereich von 30 nm bis 100 µm. Im Falle von TCO liegt die Schichtdicke beispielsweise im Bereich von 100 nm bis 1,5 µm, bevorzugt im Bereich von 150 nm bis 1 µm und stärker bevorzugt im Bereich von 200 nm bis 500 nm.

Im Kontaktverbund 1 ist die Elektrode 3 beispielsweise in Form einer band- bzw. streifenförmigen Sammelschiene (Bus Bar) ausgebildet, welche durch Aufdrucken auf die leitfähige Beschichtung 6, beispielsweise im Siebdruckverfahren, hergestellt ist. Alternativ wäre es auch möglich, die Elektrode 3 als Metallkörper, beispielsweise als Metallstreifen oder Metalldraht, vorzufertigen, der dann durch ein Lot oder einen elektrisch leitfähigen Kunststoff mit der leitfähigen Beschichtung 6 elektrisch verbunden wird. Als Elektrodenmaterial kann beispielsweise ein Metall wie Silber (Ag), insbesondere in Form einer Druckpaste zur Verwendung im Druckverfahren, Kupfer (Cu), Aluminium (Al), Wolfram (W) und Zink (Zn), oder eine Metalllegierung verwendet werden, wobei diese Aufzählung nicht abschließend ist. Beispielsweise enthält die Druckpaste Silber-Partikel und Glasfritten.

Für eine beispielsweise aus Silber (Ag) bestehende Elektrode 3, welche im Druckverfahren hergestellt ist, liegt die Schichtdicke beispielsweise im Bereich von 2 bis 25 Mikrometer (pm), insbesondere im Bereich von 10 bis 15 µm. Der spezifische elektrische Widerstand der Elektrode 3 hängt allgemein vom verwendeten Material ab, wobei er insbesondere für eine gedruckte Elektrode 3 im Bereich von 2 bis 4 Mikroohm·Zentimeter (µOhm·cm) liegt. Beispielsweise beträgt der spezifische elektrische Widerstand einer 80%-igen Silberdruckpaste für das Siebdruckverfahren 2,8 µOhm·cm. Im Vergleich zur hochohmigen leitfähigen Beschichtung 6 ist die Elektrode 3 relativ niederohmig, wobei der elektrische Widerstand beispielsweise im Bereich von 0,15 bis
4 Ohm/Meter (Ω/m) liegt. Durch diese Maßnahme kann erreicht werden, dass die angelegte Heizspannung im Wesentlichen über der leitfähigen Beschichtung 6 abfällt, so dass sich die Elektrode 3 im Betrieb nur wenig aufheizt und ein sehr geringer Anteil der verfügbaren Heizleistung an der Elektrode 3 als Verlustleistung abgegeben wird.

Wie bereits ausgeführt, kann die Elektrode 3 durch Aufdrucken einer metallischen Druckpaste auf die leitfähige Beschichtung 6 hergestellt werden. Alternativ ist es auch möglich, dass ein dünner Metallfolienstreifen als Elektrode 3 verwendet wird, welcher beispielsweise Kupfer und/oder Aluminium enthält. Beispielsweise kann durch einen Autoklavprozess durch die Einwirkung von Wärme und Druck ein elektrischer Kontakt zwischen dem Metallfolienstreifen und der leitfähigen Beschichtung 6 erreicht werden. Der elektrische Kontakt kann aber auch durch Auflöten oder Kleben mit einem elektrisch leitfähigen Kleber hergestellt werden.

Der Kontaktverbund 1 umfasst weiterhin eine im Kaltgassprühverfahren direkt auf die Elektrode 3 aufgesprühte Kaltsprühschicht 4. Die Kaltsprühschicht 4 besteht hier aus einem metallischen Material, insbesondere einem elementaren Metall oder einer Metalllegierung, beispielsweise gewählt aus Silber (Ag), Kupfer (Cu), Gold (Au), Aluminium (Al), Natrium (Na), Wolfram (W), Messing, Eisen (Fe), Chrom (Cr), Blei (Pb), Wismut (Bi), Titan (Ti), Zinn (Sn), Zink (Zn), Molybdän (Mo), Indium (In), Nickel (Ni), Platin (Pt), Vanadium (Va), Kobalt (Co), Thallium (Th) und Niob (Ni).

Die Schichtdicke der Kaltsprühschicht 4 kann breit variieren und liegt beispielsweise im Bereich von 10 bis 500 µm, insbesondere im Bereich von 20 bis 100 µm. Vorteilhaft ist die Schichtdicke der Kaltsprühschicht 4 mindestens zweimal so groß wie die Schichtdicke der Elektrode 3, um eine gute mechanische Verstärkung der Elektrode 3, insbesondere wenn diese relativ dünn ausgebildet ist, zu erreichen.

In Kontaktverbund 1 ist auf die Kaltsprühschicht 4 ein metallisches Kontaktelement 5 aufgebracht, welches zum Anschluss der leitfähigen Beschichtung 6 an eine elektrische Komponente, beispielsweise eine Strom-/Spannungsquelle (nicht gezeigt), dient. Das Kontaktelement 5 ist hier beispielsweise in Form eines vorgefertigten Metallkörpers, beispielsweise ein Metallstreifen, ausgebildet, der mit der Kaltsprühschicht 4 durch ein bleifreies oder bleihaltiges Lot oder einen leitfähigen Klebstoff (nicht näher dargestellt) fest verbunden ist. Der Metallstreifen 4 besteht beispielsweise aus Aluminium (Al) oder Kupfer (Cu) und hat eine Stärke welche beispielsweise im Bereich von 50 bis 200 µm liegt. Alternativ könnte das Kontaktelement 5 auch durch Anpressen oder Ultraschallschweißen mit der Kaltsprühschicht 4 verbunden werden. Denkbar wäre auch, das Kontaktelement 5 als Federkontakt auszubilden, der der Kaltsprühschicht 4 mit einer gewissen Federvorspannung anliegt.

Im Kontaktverbund 1 ist der thermische Ausdehnungskoeffizient des Materials des Kontaktelements 5 typischer Weise größer als der thermische Ausdehnungskoeffizient des Materials des Substrats 2. Beispielsweise liegt der thermische Ausdehnungskoeffizient eines gläsernen Substrats 2 im Bereich von ca. 7 bis 7,5 (x 10⁻⁶ K⁻¹), während der thermische Ausdehnungskoeffizient für ein aus Aluminium oder Kupfer bestehendes Kontaktelement 5 im Bereich von ca. 16 bis 17 (x 10⁻⁶ K⁻¹) liegt.

Die Kaltsprühschicht 4 besteht aus einem Material, dessen thermischer Ausdehnungskoeffizient zwischen jenen des Materials des Substrats 2 und des Kontaktelements 5 liegt. Bei einem gläsernen Substrat 2 und einem metallischen Kontaktelement 5 liegt der thermische Ausdehnungskoeffizient bevorzugt im Bereich von 12 bis 13 (x 10⁻⁶ K⁻¹). Beispielsweise ist die Kaltsprühschicht 4 zu diesem Zweck aus Titan (Ti) hergestellt.

Durch die zwischen der leitfähigen Beschichtung 6 und dem metallischen Kontaktelement 5 angeordnete Kaltsprühschicht 4 kann dem bei großen Temperaturwechseln möglichen Auftreten von thermischen Spannungen im Kontaktverbund 1 effektiv entgegen gewirkt werden. Da die Kaltsprühschicht 4 direkt auf die Elektrode 3 aufgesprüht ist, kann zudem eine besonders stabile Verbindung zwischen der Elektrode 3 und der Kaltsprühschicht 4 erreicht werden. Die Gefahr eines Bruchs des Kontaktverbunds 1 aufgrund thermischer Spannungen kann somit erheblich verringert werden.

In Fig. 2 ist ein weiteres Ausführungsbeispiel für einen erfindungsgemäßen Kontaktverbund 1 gezeigt, welcher eine Variante zum Kontaktverbund 1 von Fig. 1 darstellt. Um unnötige Wiederholungen zu vermeiden, werden lediglich die Unterschiede zum Kontaktverbund von Fig. 1 erläutert und ansonsten wird auf die dort gemachten Ausführungen Bezug genommen. Demnach ist die Kaltsprühschicht 4 direkt auf die leitfähige Beschichtung 6 aufgesprüht, wobei die Elektrode 3 auf die Kaltsprühschicht 4 aufgebracht ist und vom metallischen Kontaktelement 5 kontaktiert wird. Dieser Kontaktverbund 1 zeichnet sich, neben dem Effekt einer Verminderung von thermischen Spannungen, durch eine besonders stabile Verbindung zwischen Kaltsprühschicht 4 und leitfähiger Beschichtung 6 aus.

In Fig. 3 ist ein weiteres Ausführungsbeispiel für einen erfindungsgemäßen Kontaktverbund gezeigt, welcher eine weitere Variante zum Kontaktverbund 1 von Fig. 1 darstellt. Um unnötige Wiederholungen zu vermeiden, werden wiederum lediglich die Unterschiede zum Kontaktverbund von Fig. 1 erläutert und ansonsten wird auf die dort gemachten Ausführungen Bezug genommen. Demnach dient die Kaltsprühschicht 4 als Elektrode für die leitfähige Beschichtung 6 und ist zu diesem Zweck direkt auf leitfähige Beschichtung 6 aufgesprüht. Auf eine von der Kaltsprühschicht 4 verschiedene Elektrode zum Einleiten des Heizstroms in die leitfähige Beschichtung 6 kann somit verzichtet werden. Auch dieser Kontaktverbund 1 zeichnet sich, neben dem Effekt einer Verminderung von thermischen Spannungen, durch eine besonders stabile Verbindung zwischen Kaltsprühschicht 4 und leitfähiger Beschichtung 6 aus, wobei sich zudem die Herstellung des Kontaktverbunds 1 im Vergleich zum Kontaktverbund 1 von Fig. 1 oder Fig. 2 vereinfacht, da keine separate Elektrode 3 erforderlich ist.

Die vorliegende Erfindung stellt einen Kontaktverbund für eine flächige elektrische Struktur, beispielsweise einen Flächenheizkörper oder eine Flächenantenne, zur Verfügung, in dem durch eine Sprühschicht, welche zwischen Substrat und Kontaktelement angeordnet ist, eine Verringerung im Unterschied der thermischen Ausdehnungskoeffizienten benachbarter Komponenten des Kontaktverbunds erreicht werden kann. Dem Auftreten von thermischen Spannungen kann dadurch wirkungsvoll entgegen gewirkt werden. Zudem ist die Duktilität des Kontaktverbunds erheblich verbessert. Die Gefahr eines Bruchs des Kontaktverbunds aufgrund thermischer Spannungen kann deutlich verringert werden.

### Bezugszeichenliste

- 1: Kontaktverbund
- 2: Substrat
- 3: Elektrode
- 4: Kaltsprühschicht
- 5: Kontaktelement
- 6: leitfähige Beschichtung

## Patentansprüche

1. Elektrischer Kontaktverbund (1), welcher umfasst:
ein flächiges Substrat (2) mit einer darauf aufgebrachten elektrisch leitfähigen Beschichtung (6),
eine Elektrode (3), welche mit der leitfähigen Beschichtung (6) elektrisch verbunden ist,
ein metallisches Kontaktelement (5), bei welchem es sich nicht um ein Lot handelt, welches mit der Elektrode (3) elektrisch verbunden ist und zum Anschluss der leitfähigen Beschichtung (6) an eine elektrische Komponente dient,
eine durch ein thermisches Sprühverfahren hergestellte Sprühschicht (4), welche wenigstens ein Metall und/oder wenigstens eine Metalllegierung umfasst, wobei die Sprühschicht (4) zwischen der leitfähigen Beschichtung (6) und dem Kontaktelement (5) angeordnet ist und über einen thermischen Ausdehnungskoeffizienten verfügt, welcher zwischen den thermischen Ausdehnungskoeffizienten von Substrat (2) und Kontaktelement (5) liegt.

2. Elektrischer Kontaktverbund (1), welcher umfasst:
ein flächiges Substrat (2) mit einer darauf aufgebrachten elektrisch leitfähigen Beschichtung (6),
eine durch ein thermisches Sprühverfahren auf die leitfähige Beschichtung (6) gesprühte Sprühschicht (4), welche wenigstens ein Metall und/oder wenigstens eine Metalllegierung umfasst,
ein nicht durch ein Sprühverfahren hergestelltes, sondern als vorgefertigter Kontaktkörper ausgebildetes, metallisches Kontaktelement (5), bei welchem es sich nicht um ein Lot handelt, welches mit der Sprühschicht elektrisch verbunden ist und zum Anschluss der leitfähigen Beschichtung an eine elektrische Komponente dient,
wobei die Sprühschicht (4) über einen thermischen Ausdehnungskoeffizienten verfügt, welcher zwischen den thermischen Ausdehnungskoeffizienten von Substrat (2) und Kontaktelement (5) liegt.

3. Kontaktverbund (1) nach einem der Ansprüche 1 oder 2, bei welchem der thermische Ausdehnungskoeffizient der Sprühschicht (4) im Bereich eines mittleren Drittels eines von den thermischen Ausdehnungskoeffizienten von Substrat (2) und Kontaktelement (5) begrenzten Wertebereichs für thermische Ausdehnungskoeffizienten liegt.

4. Kontaktverbund (1) nach Anspruch 3, bei welchem der thermische Ausdehnungskoeffizient der Sprühschicht (4) zumindest annähernd einem aus den thermischen Ausdehnungskoeffizienten von Substrat (2) und Kontaktelement (5) gebildeten Mittelwert entspricht.

5. Kontaktverbund (1) nach einem der Ansprüche 1, 3 oder 4, bei welchem die Sprühschicht (4) auf die Elektrode (3) aufgesprüht ist.

6. Kontaktverbund (1) nach Anspruch 5, bei welchem die Sprühschicht (4) eine zwei bis 50 Mal so große Schichtdicke wie die Elektrode (3) hat.

7. Kontaktverbund (1) nach einem der Ansprüche 1 bis 6, bei welchem die Sprühschicht (4) auf die leitfähige Beschichtung (6) gesprüht ist.

8. Kontaktverbund (1) nach einem der Ansprüche 1 bis 7, bei welchem das Kontaktelement (5) durch ein bleifreies Lot mit der Elektrode (3) elektrisch verbunden ist.

9. Kontaktverbund (1) nach einem der Ansprüche 1 bis 8, bei welchem die Sprühschicht (4) ein oder mehrere Metalle und/oder Metalllegierungen, gewählt aus Silber, Kupfer, Gold, Aluminium, Natrium, Wolfram, Messing, Eisen, Chrom, Blei, Wismut, Titan, Zinn, Zink, Molybdän, Indium, Nickel, Platin, Vanadium, Kobalt, Thallium und Niob, umfasst.

10. Kontaktverbund (1) nach einem der Ansprüche 1 bis 9, bei welchem die Sprühschicht (4) wenigstens ein elektrisch isolierendes Material enthält.

11. Elektrische Struktur mit einem flächigen Substrat (2) und einer auf das Substrat (2) aufgebrachten elektrisch leitfähigen Beschichtung (6), welche wenigstens einen elektrischen Kontaktverbund (1) nach einem der Ansprüche 1 bis 10 umfasst.

12. Verfahren zur Herstellung eines elektrischen Kontaktverbunds (1) mit den folgenden Schritten:
Bereitstellen eines flächigen Substrats (2) mit einer darauf aufgebrachten elektrisch leitfähigen Beschichtung (6),
Herstellen einer Elektrode (3), welche mit der leitfähigen Beschichtung (6) elektrisch verbunden ist,
Herstellen eines metallischen Kontaktelements (5), bei welchem es sich nicht um ein Lot handelt, welches mit der Elektrode (3) elektrisch verbunden ist und zum Anschluss der leitfähigen Beschichtung (6) an eine elektrische Komponente dient,
Herstellen wenigstens einer Sprühschicht (4) durch ein thermisches Sprühverfahren, welche wenigstens ein Metall und/oder wenigstens eine Metalllegierung umfasst, wobei die Sprühschicht (4) zwischen der leitfähigen Beschichtung (6) und dem Kontaktelement (5) angeordnet ist und über einen thermischen Ausdehnungskoeffizienten verfügt, welcher zwischen den thermischen Ausdehnungskoeffizienten von Substrat (2) und Kontaktelement (5) liegt.

13. Verfahren nach Anspruch 12, bei welchem die Sprühschicht (4) auf die Elektrode (3) gesprüht wird.

14. Verfahren nach Anspruch 12, bei welchem die Sprühschicht (4) auf die leitfähige Beschichtung (6) gesprüht wird.

15. Verfahren zur Herstellung eines elektrischen Kontaktverbunds (1) mit den folgenden Schritten:
Bereitstellen eines flächigen Substrats (2) mit einer darauf aufgebrachten elektrisch leitfähigen Beschichtung (6),
Herstellen eines metallischen Kontaktelements (5), wobei das Kontaktelement nicht durch ein Sprühverfahren hergestellt, sondern als vorgefertigter Kontaktkörper ausgebildet wird, wobei es sich bei dem Kontaktelement nicht um ein Lot handelt und welches mit der Sprühschicht (4) elektrisch verbunden ist und zum Anschluss der leitfähigen Beschichtung (6) an eine elektrische Komponente dient,
Aufsprühen einer Sprühschicht (4) durch ein thermisches Sprühverfahren auf die leitfähige Beschichtung (6), wobei die Sprühschicht (4) wenigstens ein Metall und/oder wenigstens eine Metalllegierung umfasst und über einen thermischen Ausdehnungskoeffizienten verfügt, welcher zwischen den thermischen Ausdehnungskoeffizienten von Substrat (2) und Kontaktelement (5) liegt.

## Claims

1. Electrical contact composite (1), comprising:
a flat substrate (2) with an electrically conductive coating (6) applied thereon,
an electrode (3) that is electrically connected to the conductive coating (6),
a metal contact element (5) that is not a solder and that is electrically connected to the electrode (3) and serves for the connection of the conductive coating (6) to an electrical component,
a sprayed layer (4) produced by a thermal spraying method, which sprayed layer comprises at least one metal and/or at least one metal alloy, wherein the sprayed layer (4) is arranged between the conductive coating (6) and the contact element (5) and has a coefficient of thermal expansion that is between the coefficients of thermal expansion of the substrate (2) and the contact element (5).

2. Electrical contact composite (1), comprising:
a flat substrate (2) with an electrically conductive coating (6) applied thereon,
a sprayed layer (4) sprayed by a thermal spraying method onto the conductive coating (6), which sprayed layer (4) comprises at least one metal and/or at least one metal alloy,
a metal contact element (5) that is not produced by a spraying method, but configured instead in the form of a prefabricated contact part, which is not a solder and which is electrically connected to the sprayed layer and serves for the connection of the conductive coating to an electrical component,
wherein the sprayed layer (4) has a coefficient of thermal expansion that is between the coefficients of thermal expansion of the substrate (2) and the contact element (5).

3. Contact composite (1) according to one of claims 1 or 2, wherein the coefficient of thermal expansion of the sprayed layer (4) is in the range of a middle third of a value range for coefficients of thermal expansion bounded by the coefficients of thermal expansion of the substrate (2) and the contact element (5).

4. Contact composite (1) according to claim 3, wherein the coefficient of thermal expansion of the sprayed layer (4) corresponds at least approximately to a mean value formed from the coefficients of thermal expansion of the carrier (6) and the contact element (5).

5. Contact composite (1) according to one of claims 1, 3, or 4, wherein the sprayed layer (4) is sprayed onto the electrode (3).

6. Contact composite (1) according to claim 5, wherein the sprayed layer (4) has a layer thickness 2 to 50 times that of the electrode (3).

7. Contact composite (1) according to one of claims 1 to 6, wherein the sprayed layer (4) is sprayed onto the conductive coating (6).

8. Contact composite (1) according to one of claims 1 through 7, wherein the contact element (5) is electrically connected via a lead-free solder to the electrode (3).

9. Contact composite (1) according to one of claims 1 through 8, wherein the sprayed layer (4) comprises one or a plurality of metals and/or metal alloys, selected from silver, copper, gold, aluminum, sodium, tungsten, brass, iron, chromium, lead, bismuth, titanium, tin, zinc, molybdenum, indium, nickel, platinum, vanadium, cobalt, thallium, and niobium.

10. Contact composite (1) according to one of claims 1 through 9, wherein the sprayed layer (4) contains at least one electrically insulating material.

11. Electrical structure with a flat substrate (2) and an electrically conductive coating (6) applied on the substrate (2), which comprises at least one electrical contact composite (1) according to one of claims 1 through 10.

12. Method for producing an electrical contact composite (1) with the following steps:
providing a flat substrate (2) with an electrically conductive coating (6) applied thereon,
producing an electrode (3) that is electrically connected to the conductive coating (6),
producing a metal contact element (5)) that is not a solder and that is electrically connected to the electrode (3) and serves for the connection of the conductive coating (6) to an electrical component,
producing, by means of a thermal spraying method, at least one sprayed layer (4) that comprises at least one metal and/or at least one metal alloy, wherein the sprayed layer (4) is arranged between the conductive coating (6) and the contact element (5) and has a coefficient of thermal expansion that is between the coefficients of thermal expansion of the substrate (2) and the contact element (5).

13. Method according to claim 12, wherein the sprayed layer (4) is sprayed onto the electrode (3).

14. Method according to claim 12, wherein the sprayed layer (4) is sprayed onto the conductive coating (6).

15. Method for producing an electrical contact composite (1) with the following steps:
providing a flat substrate (2) with an electrically conductive coating (6) applied thereon,
producing a metal contact element (5), wherein the contact element is not produced by a spraying method and, but configured instead in the form of a prefabricated contact part, that is not a solder and that is electrically connected to the sprayed layer (4) and serves for the connection of the conductive coating (6) to an electrical component,
spraying a sprayed layer (4), by means of a thermal spraying method, onto the conductive coating (6), wherein the sprayed layer (4) comprises at least one metal and/or at least one metal alloy and has a coefficient of thermal expansion that is between the coefficients of thermal expansion of the substrate (2) and the contact element (5).

## Revendications

1. Un contact électrique composite (1), qui comprend :
un substrat plat (2) sur lequel a été déposé un revêtement (6) conducteur d'électricité,
une électrode (3), qui est reliée électriquement avec le revêtement (6) conducteur d'électricité,
un élément de contact (5) métallique, qui n'est pas une soudure, qui est relié électriquement à l'électrode (3) et sert à relier le revêtement conducteur d'électricité (6) à un composant électrique,
une couche de pulvérisation (4) produite par un procédé de pulvérisation thermique, qui comprend au moins un métal et/ou au moins un alliage métallique, où la couche obtenue par pulvérisation (4) est disposée entre le revêtement conducteur d'électricité (6) et l'élément de contact (5) et dispose d'un coefficient thermique de dilatation, qui se trouve entre le coefficient de dilatation thermique du substrat (2) et celui de l'élément de contact (5).

2. Contact électrique composite (I), qui comprend :
un substrat plat (2) sur lequel a été déposé un revêtement (6) conducteur d'électricité,
une couche obtenue par pulvérisation (4) pulvérisée par un procédé de projection thermique sur le revêtement conducteur d'électricité (6), qui comprend au moins un métal et/ou au moins un et/ métallique,
un élément de contact métallique (5) qui n'à pas été obtenu par un procédé de pulvérisation, mais formé comme un corps de contact préfabriqué, qui n'est pas une soudure, qui est relié électriquement avec la couche de pulvérisation et sert à relier le revêtement conducteur d'électricité (6) à un composant électrique,
où la couche obtenue par pulvérisation (4) dispose d'un coefficient de dilatation thermique, qui se trouve entre le coefficient de dilatation qui se trouve entre le coefficient de dilatation thermique du substrat (2) et celui de l'élément de contact (5).

3. Contact composite (I) selon l'une des revendications 1 ou 2, où le coefficient de dilatation thermique de la couche obtenue par pulvérisation (4) se trouve dans la région d'un tiers médian d'une gamme de valeurs pour des coefficients de dilatation thermique limitée par le coefficient de dilatation thermique du substrat (2) et celui de l'élément de contact (5).

4. Contact composite (I) selon la revendication 3, où le coefficient de dilatation thermique de la couche obtenue par pulvérisation (4) correspond au moins approximativement à une valeur moyenne formée à partir du coefficient de dilatation thermique du substrat (2) et celui de l'élément de contact (5).

5. Contact composite (I) selon l'une des revendications I, 3 ou 4, où la couche obtenue par pulvérisation (4) est pulvérisée sur l'électrode (3).

6. Contact composite (I) selon la revendication 5, où la couche obtenue par pulvérisation (4) présente une épaisseur de couche de deux à 50 fois celle de l'électrode (3).

7. Contact composite (I) selon l'une des revendications I à 6, où la couche obtenue par pulvérisation (4) est pulvérisée sur le revêtement conducteur d'électricité (6).

8. Contact composite (I) selon l'une des revendications I à 7, où l'élément de contact (5) est relié électriquement par une soudure sans plomb à l'électrode (3).

9. Contact composite (I) selon l'une des revendications à 8, où la couche obtenue par pulvérisation (4) comprend un ou plusieurs métaux et/ou alliages métalliques, sélectionné parmi l'argent, le cuivre, l'or, l'aluminium, le sodium, le tungstène, le laiton, le fer, le chrome, le plomb, le bismuth, le titane, l'étain, le zinc, le molybdène, l'indium, le nickel, le platine, le vanadium, le cobalt, le thallium et le niobium.

10. Contact composite (I) selon l'une des revendications 1 à 9, où la couche obtenue par pulvérisation (4) contient au moins un matériau électriquement isolant.

11. Structure électrique avec un substrat plat (2) et un revêtement (6) conducteur d'électricité appliqué sur le substrat (2), qui comprend au moins un contact électrique composite (1), après une des revendications 1 à 10.

12. Procédé de fabrication d'un contact électrique composite (1) avec les étapes suivantes :
fourniture d'un substrat plat (2) sur lequel a été déposé un revêtement (6) conducteur d'électricité,
fabrication d'une électrode (3), qui est relié électriquement avec le revêtement conducteur (6),
fabrication d'un élément de contact métallique (5), qui n'est pas une soudure, qui est relié électriquement à l'électrode (3) et sert à relier le revêtement conducteur d'électricité (6) à un composant électrique,
fabrication d'au moins une couche obtenue par pulvérisation (4) par un procédé de pulvérisation thermique, qui comprend au moins un métal et/ou au moins un alliage métallique, où la couche obtenue par pulvérisation (4) est disposée entre le revêtement conducteur d'électricité (6) et l'élément de contact (5) et dispose d'un coefficient thermique de dilatation, qui se trouve entre le coefficient de dilatation thermique du substrat (2) et celui de l'élément de contact (5).

13. Procédé selon la revendication 12, où la couche obtenue par pulvérisation (4) est pulvérisée sur l'électrode (3).

14. Procédé selon la revendication 12, où la couche obtenue par pulvérisation (4) est pulvérisée sur le revêtement conducteur d'électricité (6).

15. Procédé de fabrication d'un contact électrique composite (1) avec les étapes suivantes :
fourniture d'un substrat plat (2) sur lequel a été déposé un revêtement (6) conducteur d'électricité,
fabrication d'un élément de contact métallique (5) où l'élément de contact n'à pas été obtenu par un procédé de pulvérisation, mais formé comme un corps de contact préfabriqué, où l'élément de contact n'est pas une soudure et est relié électriquement à la couche obtenue par pulvérisation (4) et sert à relier le revêtement conducteur (6) à un composant électrique,
pulvérisation d'une couche obtenue par pulvérisation (4) par un procédé de pulvérisation thermique sur le revêtement conducteur d'électricité (6), où la couche obtenue par pulvérisation (4) comprend au moins un revêtement métallique et/ou au moins un alliage métallique et possède un coefficient de dilatation thermique, qui est situé entre le coefficient de dilatation thermique du substrat (2) et celui de l'élément de contact (5).
